Europäisches Patentamt

European Patent Office

Office européen des brevets

(11) Publication number: **0 069 458**

A1

## (12) EUROPEAN PATENT APPLICATION

(21) Application number: 82302765.1

(22) Date of filing: 28.05.82

(51) Int. Cl.³: **F 16 D 13/68**

(30) Priority: 25.06.81 GB 8119697
28.09.81 FR 8118229

(43) Date of publication of application:
12.01.83 Bulletin 83/2

(84) Designated Contracting States:
BE DE FR GB IT SE

(71) Applicant: AUTOMOTIVE PRODUCTS PUBLIC LIMITED
COMPANY
Tachbrook Road
Leamington Spa Warwickshire CV31 3ER(GB)

(72) Inventor: Dixon, Alan Geoffrey
12 Beaufort Close Wellesbourne
Warwick Warwickshire(GB)

(72) Inventor: Rebours, Jean-Yves
34 rue Circufaire
F-78110 Le Vestnet(FR)

(74) Representative: Farrow, Robert Michael
Patent Department Automotive Products plc Tachbrook
Road
Leamington Spa Warwickshire CV31 3ER(GB)

(54) Friction clutch driven plates.

(57) A friction clutch driven plate having a hub (11) with a
flange (12) and a friction facing carrier (13) mounted on the
hub. Springs (14) restrain the rotational movement of the
carrier (13) about the hub (11) and a friction damper plate
(25) is sandwiched between the carrier (13) and the hub
flange (12). The damping plate (25) has at least one radial
arm (31) in abutment with one end of one of the springs (14')
and an axially directed lug (32) on the arm (31) that engages
in an aperture (in this case the spring window (15')) in the
carrier (13) so that in the "at rest" or neutral position the lug
(32) is trapped between the spring (14') and one end of the
window. When the facing carrier (13) is rotated in one
direction about the hub (11) the plate (25) is fast with the
carrier, and when rotated in the other direction the plate (25)
is held stationary with the hub flange by the friction
therebetween.

Fig.1

-1-

## "Friction Clutch Driven Plates"

This invention relates to friction clutch driven plates for, but not exclusively for, automobile friction clutches.

A friction clutch driven plate for an automobile typically comprises a friction facing carrier mounted on and capable of limited angular movement about a flanged hub, springs located in spring windows in the flange and carrier and acting between the carrier and hub flange to restrain said angular movement, and a friction damping means acting between the hub and carrier to provide some hysteresis for the torque versus angular deflection curve for said angular movement.

It is known for the friction damping means to be operated by an annular control plate sandwiched between the facing carrier and the hub flange and operated by the relative angular movement to bring in the hysteresis effect, sometimes at different relative angular deflections. A typical example of this type of plate is illustrated in British Patent 1 461 329. In this driven plate the friction damping whilst varying with the degree of angular rotation is the same in both directions of rotation.

Also known is a driven plate, as illustrated in British Patent 1 493 002 in which the friction damping for the direction of rotation of the carrier around the hub in the drive direction (i.e. in which the load transmission is from the engine to the gearbox) is greater than for the overrun direction (i.e. in which the mass of the vehicle is driving the engine). In this specification the friction damping control plate is sandwiched between the carrier and the hub flange and has an arm with a lug that is trapped between one end of a spring and a radial edge of its respective hub flange window.

A disadvantage of this construction is that, in the drive direction the control plate is fast relative to the hub flange, and therefore the use of two control plates located one either side of the hub flange is difficult, and to bring the two control plates into operation after differing degrees of rotation is impossible.

This invention provides a construction of driven plate which operates to provide for greater degree of friction damping in one direction of rotation of the carrier about the hub, than in the other and which facilitates the use of two control plates.

Accordingly, there is provided a friction clutch driven plate comprising a hub having a flange thereon, a co-axial friction facing carrier mounted on the hub and capable of limited angular relative rotation about the hub, springs accommodated in spring windows in the hub flange and carrier to resist said rotation either side of a neutral point, and a co-axial annular friction damping plate sandwiched between the carrier and the hub flange, characterised in that the friction damping plate has at least one arm in abutment with one end of one of said springs and a lug that engages with an aperture in the carrier so that for rotation of the carrier about the hub on one side of the neutral point the carrier engages the lug to rotate the control plate relative to the hub flange and for rotation on the other side of the neutral point the lug is released from engagement with the carrier so that the control plate is held stationary with the hub flange by the frictional engagement therebetween.

Conveniently the respective carrier spring window of said one spring is utilised as the aperture for the lug.

The invention will be described by way of example and with reference to the accompanying drawings in which:-

Fig. 1 is an elevation of a driven plate according to this invention;

Fig. 2 is a section on the line II-II of Fig. 1;

Fig. 3 is a graph of torque load L versus angular deflection ($\theta$) for the driven plate illustrated in Fig. 1 and Fig. 2;

Fig. 4 shows a modification of the spring windows to allow the control plate to operate other than at the neutral point;

Fig. 5 shows an alternative modification of the spring windows;

Fig. 6 is an elevation of a driven plate which is a second embodiment of this invention;

Fig. 7 is a section on the line VII-VII of Fig. 6;

Fig. 8 is a graph of torque load versus angular deflection for the driven plate illustrated in Fig. 1 or Fig. 2; and

Fig. 9 shows an alternative construction of the hub and friction washers utilised in the driven plate of Figs. 6 and 7.

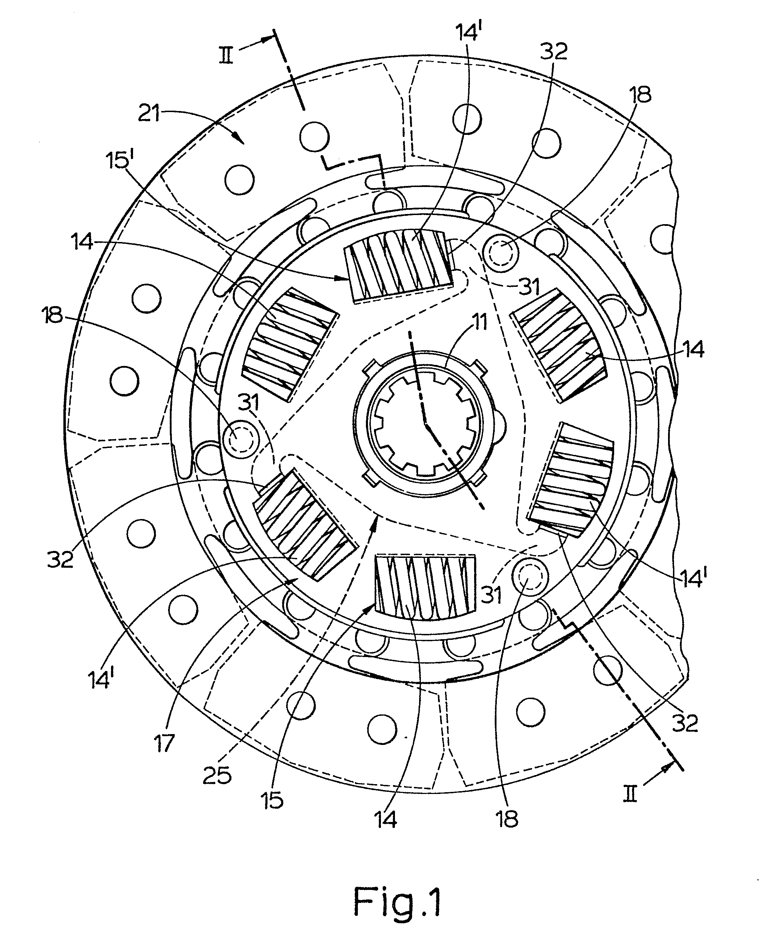

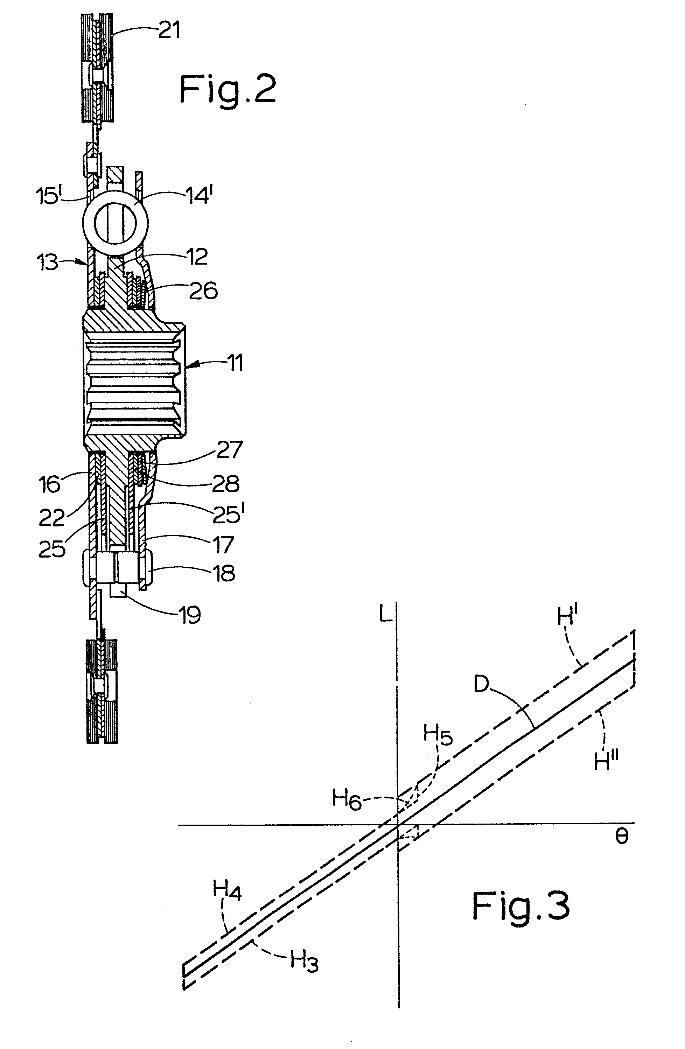

With reference to Fig. 1 and Fig. 2 of the accompanying drawings a friction clutch driven plate for an automobile comprises a hub 11 having a circumferential flange 12 and a co-axial friction facing carrier 13 mounted on the hub and capable of limited angular movement relative to the hub 11. A set of damping springs 14 are housed in aligned spring windows 15 in the facing carrier 13 and hub flange 12 and act to restrain the angular rotational movement. The damping springs 14 all have the same rate and come into operation at the same angular rotation of the carrier about the hub.

The facing carrier 13 comprises an annular carrier plate 16 and an annular retainer plate 17. The two plates 16 and 17 are disposed one on each side of the flange 12 and are secured together by stop pins 18 which pass through co-operating apertures 19 in the outer margin of the flange. The stop pins 18 limit the rotation of the carrier 13 about the hub 11 by abutment against the radial ends of the apertures 19.

A pair of opposed annular friction facings 21 are mounted on the outer periphery of the carrier plate 16 for engagement with friction surfaces on a vehicle flywheel and pressure plate (not shown).

Between the carrier plate 16 and the hub flange 12 are located a friction washer 22 of low friction material e.g. P.T.F.E. which lies adjacent the carrier plate, and a friction damping control plate 25 which lies adjacent the hub flange. Between the retainer plate 17 and the hub flange 12 are located a belleville spring washer 26 adjacent the retainer plate, a steel washer 27, a P.T.F.E. (polytetrafluoroethylene) washer 28, and a second control plate 25', which lies adjacent the hub flange.

The two control plates are symmetrically opposite each being a co-axial annular plate having three equiangularly spaced radially projecting arms 31 thereon. Each arm 31 has an axially directed lug 32 which is bent in the direction of the adjacent facing carrier plates 16 and 17 so that lugs 32 each engage in one end of a facing carrier spring window 15'. The lugs 32 all engage with the same operative end of their respective springs i.e. if the facing carrier 13 is rotated anti-clockwise with respect to the hub, the lugs 32 all engage the trailing edge of their respective spring apertures.

With reference also to Fig. 3 of the drawings and with the hub 11 held stationary and the friction facings carrier 13 rotated first anti-clockwise in its drive direction, the mode of operation of the hub is as follows:-

(i)   The springs 14 resist movement of the carrier about the hub (line D).  This is a straight line relationship since the springs 14 all have the same angular movement.  Since the lugs 32 are trapped between the springs 14' and their respective trailing ends of the windows 15', the control plates 25 rotate with the carrier causing some frictional engagement between the control plates 25 and the hub flange 12.  Since the washers 22, 26, 27 and 28 are located between the control plates 25 and the facing carrier 13 they do not contribute to any friction damping.  This friction damping causes the hysteresis as shown by the upper curve H' on the graph.  The build up of torque against angular deflection continues until the pins 18 limit the degree of relative rotation.

(ii)   If the drive load is now relaxed the above sequence of events is reversed and the friction damping causes the load hysteresis as shown by the lower curve H''.  The springs 14' return the control plate to the neutral point.

(iii) If the reverse rotation (i.e. clockwise) is continued through the neutral point i.e. the starting point and the driven plate goes into overrun mode, then when the facing carrier 13 goes through the neutral point the ends of the springs 14' are held by the hub windows 15 and further clockwise movement of the carrier causes the adjacent ends of the carrier windows 15 to move on releasing the lugs 32.  Thereafter the control plates 25 are held stationary relative to the hub flange 12 by the high frictional engagement therebetween.  Hence friction damping is caused by the P.T.F.E. washer 22 acting between the carrier plate 16 and control plate 25, and the P.T.F.E. washer 28 acting between the other control plate 25' and the washer 27 which is rotationally fixed relative to the retainer plate.  This total friction damping is about one third of the total damping in the anti-clockwise drive direction.  This is the curve $H_3$ in Fig. 3. The clockwise movement continues until the pins 18 limit the relative rotation.

(iv)   If the overdrive load is now relaxed so that carrier 13 again rotates anti-clockwise, the control plates 25 are held by the lugs 32 against the ends of the spring 14 so that the friction engagement is again set up, between the P.T.F.E. washer 22, and its adjacent plates 16 and 25, and the P.T.F.E. washer 28 and its adjacent plate 25' and steel washer 27.   This is the curve $H_4$ on Fig. 3.

Whilst the invention has been described with the springs 14 all having the same rate and all being arranged to come into operation simultaneously it is possible that the springs 14 could be arranged to have differing spring rates, and the spring windows 15 in the hub flange 12 could be given different circumferential lengths so that the springs 14 are brought into operation in stages.

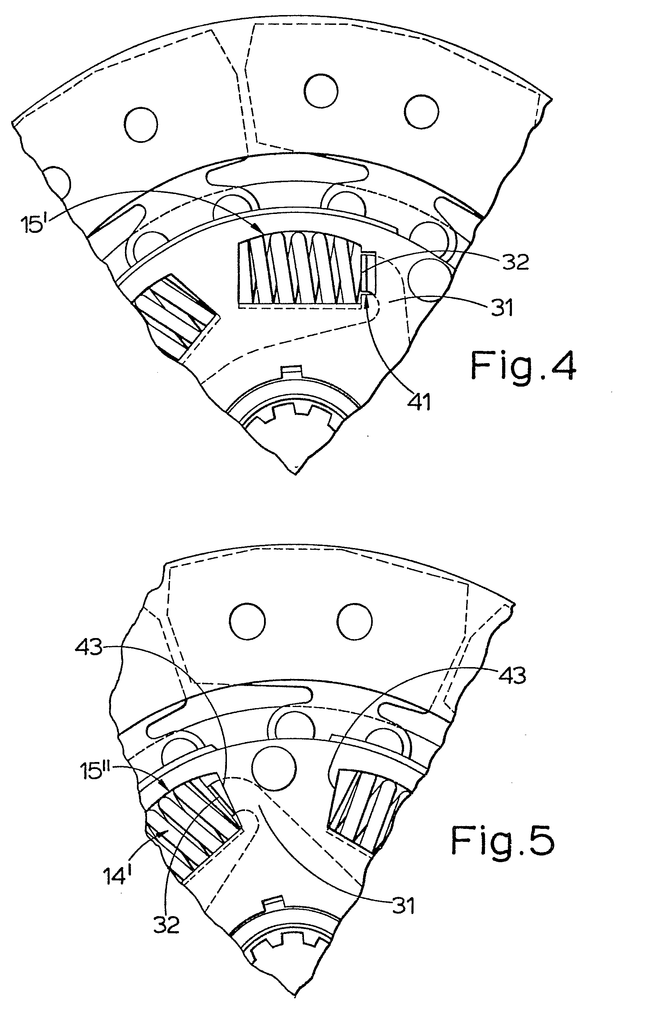

In a modification of the driven plate as can be seen in Fig. 4 of the accompanying drawings, the spring windows 15' in the facing carrier are provided with circumferential extensions 41 so that the lugs 32 are arranged with some circumferential play so that the friction damping is brought into operation after a predetermined amount of rotation in the drive direction, rather than at the neutral point (see Fig. 3 $H_5$).

Further if the play provided for the lugs 32 on one plate 25 is different to clearance around the lugs 31 on the other plate 25' then the degree of friction damping can be altered with the amount of relative rotation as the different control plates are brought into operation.

In another modification of the driven plate as illustrated in Fig. 5 the spring windows 15'' in the facing carrier have sloping radial edges 43 so that the radially inner sides of the springs 14' are held snugly, but the radially outer sides are free. The lug 32 is located against the trailing end of its respective spring 14' and is brought into operation slowly as the inner edge of the spring is compressed by the carrier (see $H_6$ Fig. 3) until the whole of the respective radial edge abuts the one end of the spring 14'.

In light duty applications it is envisaged that only a single control plate 25 having less than three arms may be necessary.

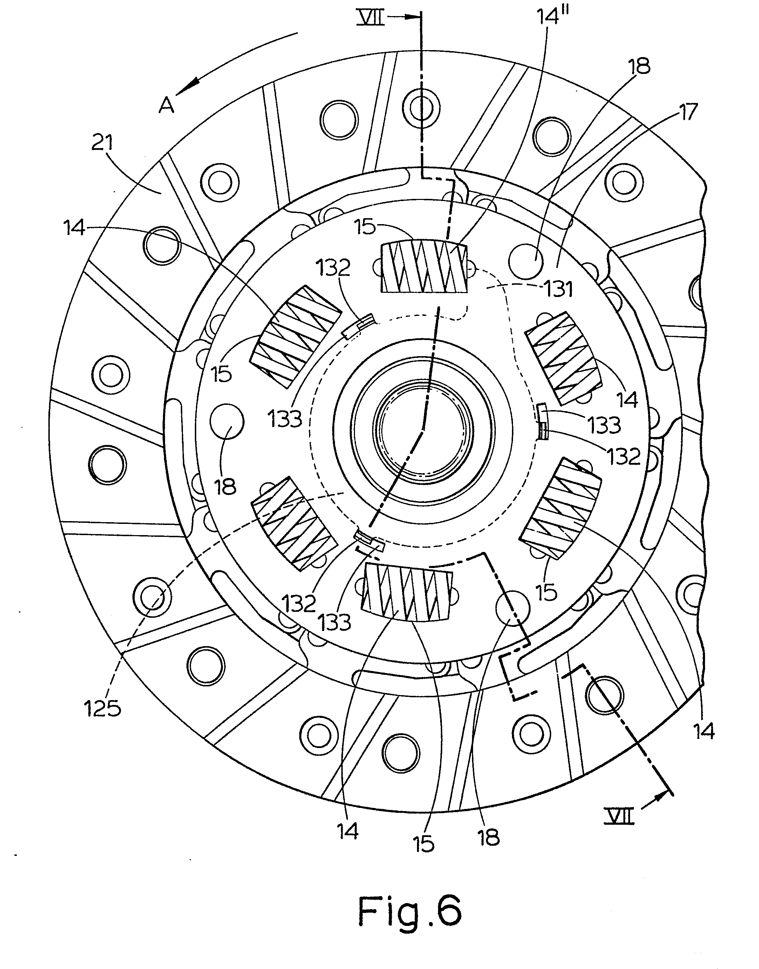

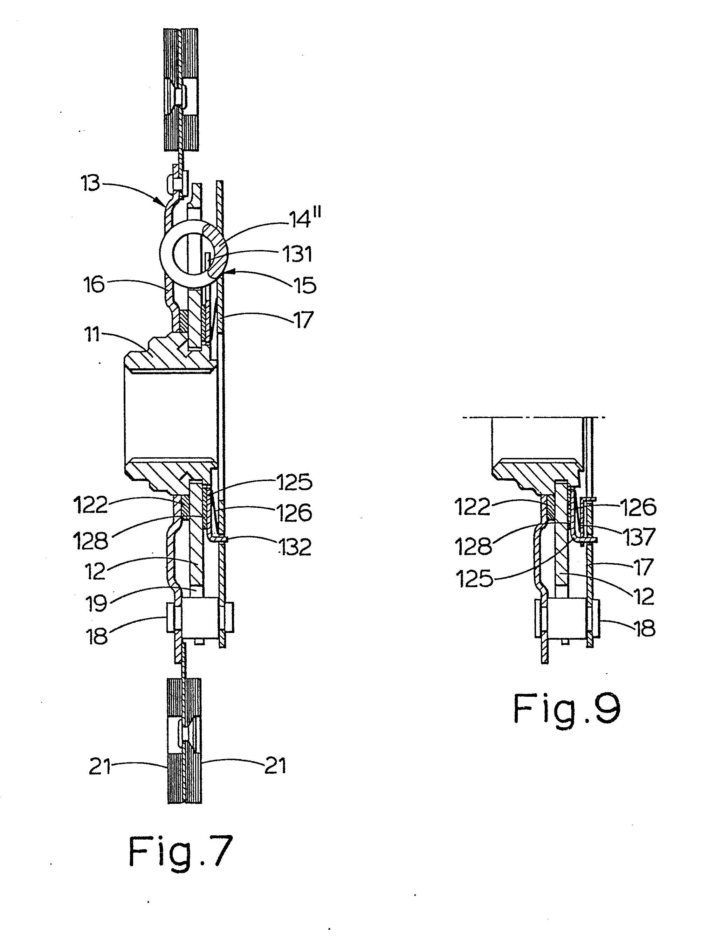

Fig. 6 and Fig. 7 of the accompanying drawings illustrates a second embodiment of the invention and those components that are common with the embodiment previously described will be given the same reference numerals.

In the driven plate of the second embodiment a friction washer 122 is located between the carrier plate 16 and the hub flange 12. On the opposite side of the hub flange, between the retainer plate 17 and the flange 12 are located a belleville spring washer 126 adjacent the retainer plate, a friction damping control plate 125 and a second friction washer 128 which lies adjacent the hub flange 12.

The control plate 125 is a co-axial annular plate having one substantially radially projecting arm 131 thereon. The arm 131 is in abutment with one end of one of the damping springs, that end being the trailing end of the spring when the driven plate is operating in drive i.e. if the hub is held stationary and the facing carrier is rotated anti-clockwise about the hub in the direction of arrow A. The control plate also has three equiangularly spaced lugs 132 thereon that are axially bent to engage with circumferentially elongated slots 133 in the retainer plate 17. When the clutch plate is in its unloaded or equilibrium condition as shown in Fig. 1, each lug 132 is in abutment with the trailing edge of its co-operating slot 133.

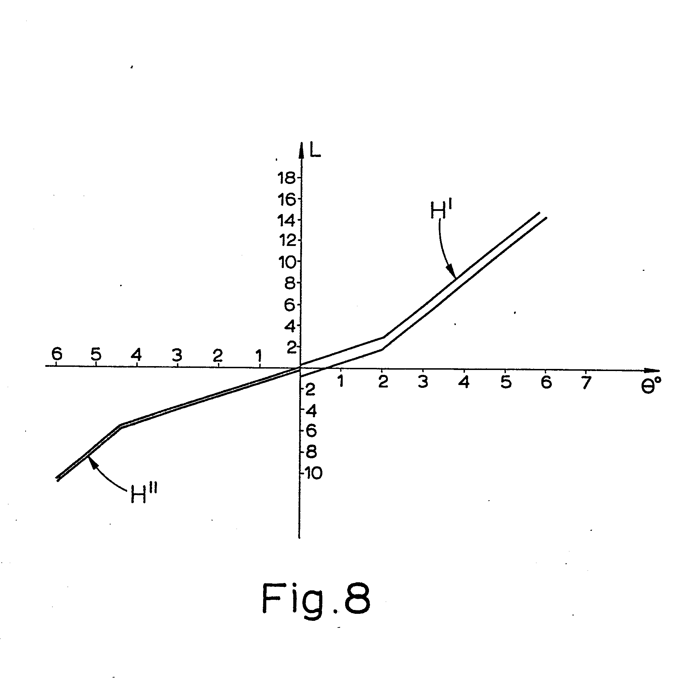

With reference also to Fig. 8 of the drawings and with the hub 11 held stationary and the friction facings carrier 13 rotated first anti-clockwise in its drive direction, the mode of operation of the hub is as follows:-

i) The springs 14 resist movement of the carrier about the hub, with the springs operating in stages forming the stepped curve of Fig. 8. Since the lugs 132 each abut the trailing edge of their respective slot 133 the control plate 125 move with the carrier 13 causing frictional engagement between the control plate 125 and friction washer 28. There is also some frictional engagement caused by the friction washer 122. Since the Belleville spring 126 is located between the control plates 125 and the retainer plate 17 it does not contribute to any friction damping. This friction engagement causes the hysteresis as shown by the upper curve H' on the graph. The build up of torque against angular deflection continues until the pins 18 limit the degree of relative rotation.

ii) If the drive load is now relaxed, the return movement of the trailing end of one of the springs 14'' against the arm 131 causes the control plate 125 to move with the carrier and reverse the above sequence of events.

iii) If the reverse rotation (i.e. clockwise) is continued through the neutral point i.e. the driven plate is in its overdrive condition, then when the facing carrier 13 goes through the neutral point the ends of the springs 14 are held by the hub apertures 15 and further clockwise movement of the carrier will not result in the spring 14'' moving the control plate 125. Since the frictional engagement between the control plate 125 and the hub flange 12 is greater than that generated between the control plate and the retainer plate 17 by the Belleville spring 126, the control plate is held stationary relative to the hub flange 12 by the high frictional engagement therebetween. Hence friction damping is caused by the friction washer 122 acting between the carrier plate 16 and the hub flange, and the Belleville spring 126 acting between the control plate 125 and the retainer plate 17. The elongated apertures 133 accommodate the relative movement of the control plate 125 relative to the facing carrier 13. This total friction damping is about one third of the total damping in the anti-clockwise drive direction. This is the curve H'' in Fig. 3. The clockwise movement continues until the pins 18 limit the relative rotation.

iv) If the overdrive load is now relaxed so that carrier 13 again rotates anti-clockwise, the reverse sequence of events takes place.

Whilst the invention has been described with the spring 14 all having the same rate and coming into operation in stages it is possible that the spring 14 could be arranged to have differing spring rates, to come into operation simultaneously.

Further as previously described the plates 125 could be arranged with a slight circumferential clearance around the lugs 132 at the trailing edge of each aperture 133 so that the friction damping is brought in at times other than at the neutral point.

With reference to Fig. 9, a low friction nylon or P.T.F.E. (polytetrafluoroethylene) washer 137 is inserted between the Belleville spring 126 and the retainer plate 17. Therefore, in the overdrive condition the friction damping will be due to the washer 122 and the washer 137.

Claims

1.       A friction clutch driven plate comprising a hub (11) having a flange (12) thereon, a co-axial friction facing carrier (13) mounted on the hub (11) and capable of limited angular relative rotation about the hub, springs (14) accommodated in spring windows (15) in the hub flange and carrier to resist said rotation either side of a neutral point and a co-axial annular friction damping control plate (25) or (125) sandwiched between the carrier (13) and hub flange (12) characterised in that the friction damping plate (25) or (125) has one arm (31) or (131) in abutment with one end of one of said springs (14'') and a lug (32) or (132) that engages with an aperture (15) or (133) in the carrier (13) so that for rotation of the carrier (13) about the hub (11) on one side of the neutral point, the carrier engages the lug (32) or (132) to rotate the control plate (25) or (125) relative to the hub flange (12), and for rotation on the other side of the neutral point the lug (32) or (132) is released from engagement with the carrier so that the control plate (25) or (125) is held stationary with the hub flange (12) by the frictional engagement therebetween.

2.      A driven plate as claimed in Claim 1, characterised in that the lug (32) or (132) engages in the aperture (15') or (133) in the carrier so that at the neutral point there is some circumferential play between the lug (32) or (132) and the end of the respective aperture (15') or (133) with which it engages for rotation on said one.side of the neutral point.

3.      A driven plate as claimed in Claim 1 or Claim 2, characterised in that the respective carrier spring window (15') of said one spring (14) is utilised as said aperture and the lug (32) is formed on the arm (31) of the control plate (25) and is located between one end of said one spring and the radial edge of its respective aperture.

4.      A driven plate as claimed in any one of Claims 1 to 3 in which the facing carrier (13) comprises a co-axial annular carrier plate (16) mounted on the hub (11) to one side of the flange (12), and a co-axial annular retainer plate (17) mounted on the hub (11) to the other side of the flange characterised in that there are two friction damping control plates (25) and (25') located one on each side of the flange (12).

5.      A driven plate as claimed in Claim 4 when dependant upon Claim 2, characterised in that the circumferential free play for the lugs (32) on one control plate (25) differs from the free play for the lugs (32) on the other control plate (25').

6.      A driven plate as claimed in Claim 3 and Claim 4 when dependant upon Claim 3 in which the carrier (13) spring windows (15) are such that the radially inner side of each spring (14) is a snug fit therein and the radially outer side of each spring (14) has clearance therein, characterised in that at the neutral position the lug (32) is trapped between the radially inner side of the one end of said one spring (14') and the inner radial edge of the spring window.

7.      A driven plate as claimed in any one of Claims 3, 5, 6 and Claim 4 when dependant upon Claim 3, characterised in that the control plate (25) has three arms (31) thereon and the lugs (22) are located one on each arm (31) and are each connectable with the same operative end of their respective springs.

8.      A driven plate as claimed in Claim 1 or Claim 2, characterised in that the control plate (125) has three axially directed lugs (132) that each engage in a circumferentially elongated aperture (133) in the carrier (13).

9.      A driven plate as claimed in any one of Claims 1, 2 and 8, characterised in that a spring washer (126) acts between the control plate (125) and the facing carrier (13) to bias the control plate (125) against a friction washer (128) on the hub flange (12).

10.      A driven plate as claimed in Claim 9, characterised in that a low friction washer (137) is located between the Belleville washer (126) and the facing carrier (13).

Fig.1

# Fig.2

21

15' 14'

13 12

26

11

27

16 28

22 25'

25 17

18

19

# Fig.3

Fig.4

Fig.5

Fig.6

Fig.7

Fig.9

Fig.8

0069458

European Patent
Office

**EUROPEAN SEARCH REPORT**

Application number

EP 82 30 2765

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 267 482 (FICHTEL-SACHS) <br><br> *Page 8, line 5 to page 10, line 19; figures 4,6* & GB - A - 1 493 002 (Cat. D) <br><br>--- | 1,2,7,8 | F 16 D 13/68 |
| X | FR-A-2 238 864 (DIAMLER-BENZ) <br> *Page 3, line 33 to page 4, line 18; figure 1* <br><br>--- | 1,2 | |
| X | FR-A-2 387 384 (VEB) <br> *Page 6, lines 27-33; figure 1* <br><br>--- | 1,3 | |
| A | FR-A-2 225 307 (DAIMLER-BENZ) <br><br> & GB - A - 1 461 329 (Cat. D) <br><br>----- | | |

TECHNICAL FIELDS
SEARCHED (Int. Cl. ³)

F 16 D
F 16 F

The present search report has been drawn up for all claims

| Place of search | Date of completion of the search | Examiner |
|---|---|---|
| THE HAGUE | 05-10-1982 | BARON C. |